# EUROPEAN PATENT SPECIFICATION

(11) **EP 2 520 421 B1**
(45) Date of publication and mention of the grant of the patent: **24.02.2016**
(21) Application number: 12167024.4
(22) Date of filing: 07.05.2012
(51) Int. Cl.: B29D 30/52, B29C 47/04, B29C 47/06, B60C 19/08

(54) **Method and device for manufacturing an antistatic vehicle tire**
Verfahren und Vorrichtung zur Herstellung eines antistatischen Fahrzeugreifens
Procédé et dispositif de fabrication d'un pneu de véhicule antistatique

(30) Priority: 06.05.2011 NL 2006728
(43) Date of publication of application: 07.11.2012
(73) Proprietor: Apollo Tyres Global R&D B.V., 7521 PT Enschede (NL)
(72) Inventor: Wielens, Marcus Hendrikus Maria, 7152 CW Eibergen (NL); Van der Meulen, Evert-Jan Jitse, 7642 AV Wierden (NL)
(74) Representative: Michalski Hüttermann & Partner Patentanwälte mbB

(56) References cited:
- EP-A1- 1 270 174
- DE-A1-102007 039 100
- DE-T2- 60 018 248
- US-A1- 2003 136 498

## Description

The present invention relates to a method for manufacturing an antistatic tire. The invention also relates to a device for implementing the method.

With the growing concerns about the environmental effects of motorized vehicles, fuel economy and reduction of other nuisances caused by such vehicles have become a priority and one of the main objectives of tire manufacturers has been to produce a tire which combines a low rolling resistance, excellent grip on dry, wet, snowy and icy ground, good wear resistance, and low rolling noise. One of the developments has been to provide a tire having a tread that comprises silica as its main reinforcing filler. Although tires with silica based tread portions yield a good compromise of fulfilling most of the above mentioned desirable properties, a drawback of these tires has been that they tend to accumulate relatively high levels of static electricity that is formed by friction of the tire against the road while driving. This is because tread rubbers comprising silica have relatively poor conductivity. With poor conductivity is meant a specific electrical resistance of higher than 10⁸ Ω.cm³ after vulcanization. Static electricity when accumulated in a tire can give rise to a disagreeable electric shock for the occupant of the vehicle when touching the body thereof. Also, the ozone produced by the electric discharge may enhance tire ageing, and on-board radio reception may be interfered.

A method for manufacturing an antistatic tire is known from EP 0658452 A1. The disclosed method consists of inserting a strip or other insert of a conductive rubber mixture in the tread portion of the tire. The insert preferably extends all round the circumference of the tire and extends in the radial direction from the tire ground contacting surface to an underlying conductive layer of the tire, such as one of the crown plies, the carcass reinforcement layer or a conductive tread base layer, to form conductive chimneys that make the electrical connection. Electrical conductivity is usually conferred by filling the conductive rubber mixture with a suitable amount of carbon black.

Closest prior art document EP1270174 A1 discloses a method of manufacturing a tread layer of a tire, wherein a tread layer and a conductive rubber base layer arranged underneath the tread layer are co-extruded using a co-extruder provided with at least two extrusion screws. A portion of the conductive base layer is diverted in the extrusion mould into the tread layer to form a conductive insert.

DE102007039100 A1 discloses a method of manufacturing a tread layer of a tire, provided with a conductive insert that runs through the tread layer. The tire is made by dividing an extruded tread layer in the thickness direction thereof to produce free surfaces in the tread layer, coating the free surfaces with a conductive rubber mixture, and rejoining the free surfaces whereby the conductive rubber mixture forms the conductive insert.

US 2003/136498 A1 discloses a method of manufacturing a tread layer of a tire, the tread layer comprising a rubber mixture and a conductive insert that extends across the thickness of the tread layer from the ground contacting surface of the tread layer to a conductive rubber base layer arranged underneath the tread layer. The method comprises co-extruding the tread rubber layer and a conductive base layer together with a third conductive rubber mixture upstream of an extrusion orifice. The third mixture is brought into the extruded flow of the other rubbers by a micro-extruder, the nozzle of which passes through the flow channels of each of the tread and conductive base layer rubbers.

Although some improvements in antistatic behavior are obtained in the known tire, this generally goes at the expense of other tire properties, such as rolling resistance and durability. The conductive chimneys of the tread base layer created between the ground contacting surface of the tread layer and the tire conductive base layer divide the tread layer in a number of mutually separated sections. This construction may weaken the tires and their durability is compromised, for instance because the conductive chimneys of the base layer in between the tread sections tend to separate therefrom in use. Further, a low rolling resistance and other desirable properties may be compromised.

It is an object of the present invention to provide a method and device for manufacturing an antistatic tire that does not have the above mentioned disadvantages, or at least to a lesser extent.

In a first aspect of the invention, a method of manufacturing a tread layer of an antistatic tire is provided, the tread layer comprising a rubber mixture and a conductive insert that extends across the thickness of the tread layer from the ground contacting surface of the tread layer to a conductive rubber layer arranged underneath the tread layer, the method comprising the steps of:
a) extruding the tread layer rubber using an extruder provided with at least one extrusion screw;
b) temporarily dividing the extruded tread layer in the width direction thereof to produce free surfaces in the tread layer;
c) coating the free surfaces with a conductive rubber mixture; and
d) rejoining the free surfaces whereby the conductive rubber mixture forms the conductive insert,
wherein all steps a) to d) are carried out before cooling the extruded tread layer, and wherein the conductive rubber mixture comprises a conductive rubber solution.

The method according to the invention allows to provide the tread layer of a tire with an extremely thin conductive layer that extends in the thickness direction of the tread layer to provide the tire with antistatic properties. Since the conductive layer chimney is extremely thin, other desirable properties of the tire and in particular of the tread layer thereof, are not or only slightly affected. Producing and rejoining the free surfaces barely affects the integrity of the tire, or does not affect the integrity of the tire at all.

According to the invention, a method is provided wherein all steps a) to d) are carried out before cooling the extruded tread layer. Dividing, coating and rejoining the free surfaces is carried out in the extruder or just after the extruded tread layer has exited the extrusion head.

In still another aspect of the invention, a method is provided wherein the tread layer and a, optionally conductive, rubber layer arranged underneath the tread layer are co-extruded using a co-extruder provided with at least two extrusion screws. Co-extrusion of tread portions of a tire is known per se. In such a process, an extruder is used with an extrusion head having at least two flow channels, each for one of the rubber mixtures. The channels each connect upstream to conveying screws for transporting the rubber mixture melts and connect downstream to one and the same extrusion orifice, in which the at least two rubber mixture melts join and exit the extruder as a multilayered structure. The extrusion orifice is delimited by two side walls, the mutual distance of which defines the width of the co-extrudate, and a top and bottom wall, defining the thickness of the co-extrudate.

Temporarily dividing the co-extruded tread layer in the thickness direction thereof to produce free surfaces in the tread layer can be carried out in each flow channel, or, alternatively, can be carried out in the extrusion orifice after the co-extruded rubber layers have been joined. Coating and rejoining of the produced free surfaces may also be carried out in each flow channel, or, alternatively, may be carried out in the extrusion orifice after the co-extruded rubber layers have been joined.

In an aspect of the invention, a method is provided wherein the co-extruded tread and optionally conductive rubber layers are both temporarily divided, coated and rejoined. In this embodiment dividing, coating and rejoining are carried out in the extrusion orifice after the co-extruded rubber layers have been joined. This embodiment allows to produce a thin conductive layer that extends in the thickness direction of both the tread and optionally conductive rubber layer and is made in one continuous operation. This ensures an improved conductivity of the conductive rubber chimney.

Although dividing the extruded tread layer in the thickness direction thereof to produce free surfaces in the tread layer, coating the free surfaces with a conductive rubber mixture, and rejoining the free surfaces whereby the conductive rubber mixture forms the conductive insert can be performed by a number of distinct devices, a preferred embodiment of the method according to the invention is characterized in that steps b) to d) are performed by placing an elongated injection element in the extruded layer(s), the injection element comprising a supply channel for the conductive rubber mixture and a slit in its circumferential surface connecting to the supply channel, and letting the conductive rubber mixture flow out of the slit. The elongated injection element is preferably positioned in the (co-)extruded layer(s) with its longitudinal axis in the thickness direction thereof, but may also be positioned at an angle with the thickness direction. The slit of the elongated injection element preferably extends in the longitudinal direction of the element but may also have a direction that makes a non-zero angle with the longitudinal direction. The slit is preferably positioned such that its length covers the tread layer and (part of) the conductive undertread layer, in order to make an electrical connection between the tread and conductive undertread layers.

In the device according to the invention, the slit of the injection element should therefore preferably extend across the at least two flow channels so as to insert the conductive rubber mixture into each rubber mixture upstream from the extrusion orifice, in an embodiment wherein dividing, coating and rejoining of the produced free surfaces are carried out in each flow channel separately. In an embodiment wherein dividing, coating and rejoining of the produced free surfaces is carried out in the common extrusion orifice after the co-extruded rubber layers have been joined, the slit of the injection element should preferably extend across the extrusion orifice so as to insert the conductive rubber mixture into each rubber mixture of the co-extrudate.

The advantage of the injection element is that it performs the functions of temporarily dividing the extruded tread layer in the width direction thereof to produce free surfaces in the tread layer, coating the free surfaces with a conductive rubber mixture, and rejoining the free surfaces whereby the conductive rubber mixture forms the conductive insert simultaneously, i.e. in one operation. Indeed, since the injection element is positioned in the extruded or co-extruded rubber stream, this stream is divided since it has to flow around the injection element. Due to the flow of the rubber, a division of the co-extruded rubber stream still exists over some distance downstream of the injection element. In this part (the wake of the injection element) the average pressure will be lower than upstream from the injection element. By preferably positioning the slit in the downstream part of the circumferential area of the injection element, the conductive rubber mixture is sucked into the downstream wake area, coats the free surfaces and is carried away with the rubber flow, where the free surfaces rejoin due to the lateral pressure in the extruder head. In this way, a thin conductive layer is formed that extends in the thickness direction of the tread layer to provide the tire with antistatic properties.

Depending on the rheological properties of the conductive rubber mixture, it may be advantageous to provide a method wherein the conductive rubber mixture is ejected from the slit under pressure. To this end, an embodiment of the device according to the invention is provided wherein the elongated injection element comprises pressure means connected to the supply channel. Pressure means may for instance comprise a hydraulic cylinder, that is actuated by a cam shaft or other means. In another embodiment, the pressure means comprise a pump and valve. In both embodiments, the conductive rubber mixture can be injected continuously by exerting a continuous pressure and leaving the valve in its open position. A preferred embodiment of the invention provides a method wherein ejecting the conductive rubber mixture is performed intermittently. This can be achieved for instance by operating the pressure means intermittently, such as by intermittingly operating the hydraulic cylinder, or by closing and opening the valve intermittently. The present embodiment provides control over the total volume of conductive rubber mixture injected into the tread portion of the tire for one tire revolution, and over the geometry of the conductive rubber insert. Indeed, by intermittent injection, the insert may be provided in a discontinues fashion across the circumference of the tire.

The method according to the invention is characterized in that the conductive rubber mixture comprises a conductive rubber solution. Using a solution allows to tailor the viscosity of the rubber mixture to the needs of the method, in particular to lower the viscosity of the rubber mixture to the needs of the method. A conductive rubber compound preferably comprises a rubber polymer and an amount of carbon black that is blended with the rubber polymer in a preferred range of from 30 to 100 parts by weight per 100 parts by weight of the rubber polymer, more preferably from 40 to 80 parts by weight, even more preferably from 50 to 70 parts by weight. In addition to carbon black, the conductive rubber compound may comprise other fillers, such as silica for instance, and/or processing aids. The conductive rubber compound and/or the optionally conductive tread base layer compound preferably have a specific resistance of at most 10⁶ Ω.cm³ after vulcanization, preferably at most 10⁵ Ω.cm³ after vulcanization, and most preferably at most 10⁴ Ω.cm³ after vulcanization.

The conductive rubber solution or cement preferably comprises a conductive rubber compound as described above dissolved in a suitable solvent. Preferred solvents comprise organic solvents, of which hexane, heptane, petroleum ether, tetrahydrofuran and cyclohexane (benzene) are particularly preferred. Preferred conductive rubber solutions have a viscosity at room temperature ranging from 50-250 DIN-s, more preferably from 100-150 DIN-s, and most preferably from 130-140 DIN-s.

The method of the invention surprisingly yields sufficient electrical conductivity between the ground contacting surface of the tire and conductive parts underneath the tire ground contacting surface, and moreover causes a good adhesion between the rejoined free surfaces. A priori, it would seem that the presence of an insert that creates an interruption of the interface all along a thickness length of the rubber mixtures might interfere with the adhesion of the mixtures, or result in serious debonding defects at the interface between the layers in the unvulcanised and vulcanised condition. This does not happen and may be due to the conditions of elevated temperature and pressure that are typically used in extrusion without contacting the open air.

Other advantages and characteristics of the invention will emerge from the following description of an exemplary embodiment of the method and device for manufacturing the tread portion of an antistatic tire according to the invention, with reference to the attached figures, in which:
Figure 1 schematically shows a perspective view of a cross-sectional part of a tire according to an embodiment of the invention;
Figure 2 schematically shows a side view in cross-section in the mid-plane of an embodiment of a device according to the invention; and
Figure 3 schematically shows a bottom view of the device shown in figure 2.

In the following description, the same reference numbers are used to denote identical elements of the embodiments shown in the figures.

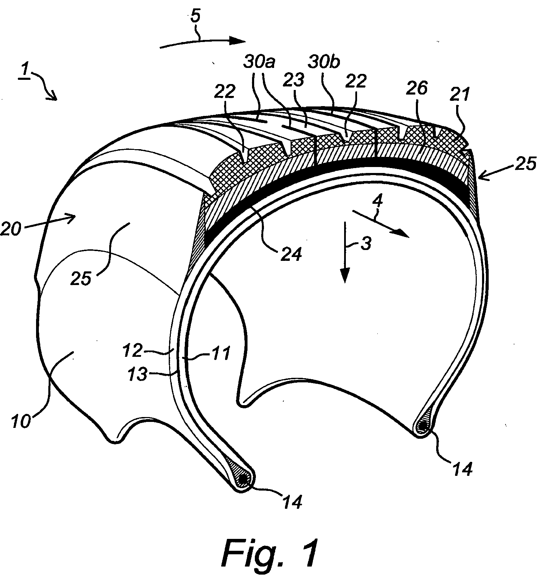

Referring to figure 1, tire 1 comprises a sidewall portion 10 of a rubber polymer and a tread portion 20 that is composed of different parts as elucidated below. The tread portion 20 of the embodiment shown comprises a poorly conducting tread layer 21 that provides a ground contacting surface 23 disposed in a radially outward part of the tread portion 20. The tread layer 21 is provided with longitudinal grooves 22 and possibly transverse grooves (not shown). The tread portion 20 further comprises an optionally conductive tread base layer 26 arranged underneath the tread layer 21, and an optionally conductive undertread layer 24, the latter providing adequate adhesion to the underlying nylon overhead or steelcord layers (12, 13, 11). At the sides of the tread portion 20, wing tips 25 are provided which may be made of conductive or poorly conductive rubber. In the embodiment shown, sidewall portion 10 is provided with an inner layer 11 of a rubber that may differ from the rubber used in an outer coating layer 12. A carcass layer 13 of preferably steel, nylon, rayon or polyester cords is embedded in layer 12 and mechanically connected to the bead region 14.

According to one embodiment of the method according to the invention, the tread layer 21 and a tread base layer 26 (which can be conductive but needs not be conductive) are co-extruded using a co-extruder provided with at least two extrusion screws. The extruded tread 21 and tread base layer 26 are then temporarily divided in the thickness direction 3 thereof to produce free surfaces in the tread 21 and tread base layer 26. The free surfaces thus produced are then coated with a conductive rubber mixture and the free surfaces rejoined whereby the conductive rubber mixture forms a thin conductive insert 30. In the embodiment shown, two conductive inserts (30a, 30b) are formed, wherein one conductive insert 30a is discontinuous whereas another conductive insert 30b is continuous in the longitudinal direction 4 of the tire.

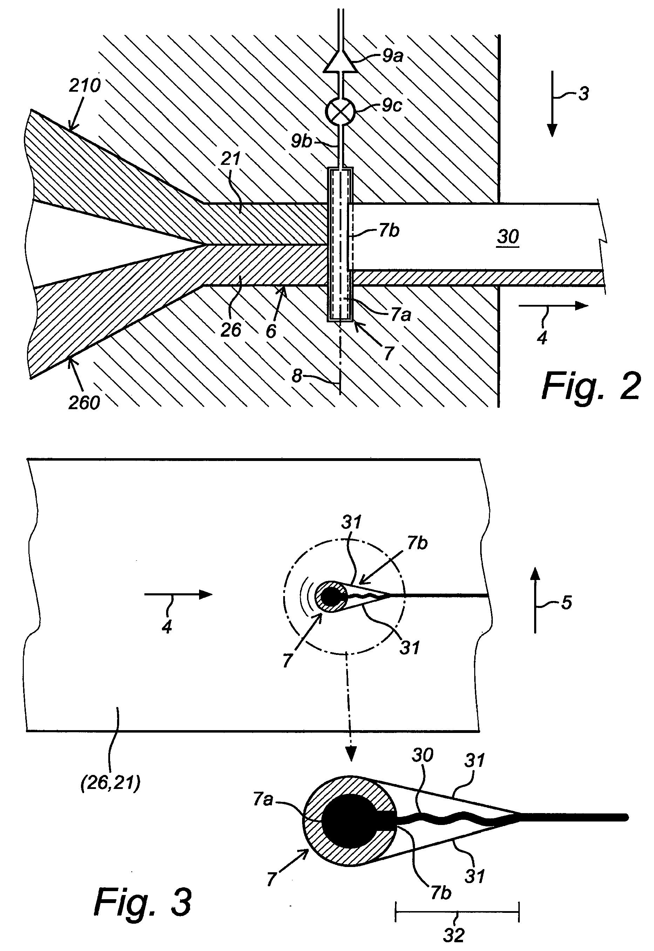

An embodiment of a device for carrying out the above described method is schematically shown in figures 2 and 3. The device comprises a co-extruder (not shown) provided with two extrusion screws for extruding the tread layer 21 rubber mixture and the tread base layer 26 rubber mixture. The extrusion screws each comprise a downstream flow channel (210, 240) for the tread layer rubber mixture 21 and the tread base layer rubber mixture 26 respectively. Both channels (210, 260) connect at their downstream end to an extrusion orifice 6, into which the flowing rubber mixtures (21, 26) come together. In the embodiment shown, dividing and coating means are located in the extrusion orifice 6 and comprise an elongated injection element 7 that is positioned with its longitudinal axis 8 parallel to the thickness direction 3. As shown in the bottom view of figure 3, the injection element 7 is positioned in the middle of the extrusion orifice to produce a central insert 30. However this need not be so, as shown in figure 1 where the inserts are positioned off-center. The elongated injection element 7 comprises a central hollow supply channel 7a through which a conductive rubber mixture 30 is supplied, and an elongated slit 7b in its circumferential surface that connects to the supply channel 7a. The slit 7b has its axis parallel to the longitudinal axis 8 of the injection element 7, but this need not be so. Further, the slit 7b is provided in the downstream part of the circumferential surface of the injection element 7 and extends over part of its length only. It is important to position the slit 7b such that it contacts both tread layer 21 and tread base layer 26 rubber mixtures. The elongated injection element 7 may further comprise pressure means in the form of a pump 9a connected through a supply line 9b to the supply channel 7a, and a valve 9c for temporarily shutting off the supply line 9b. However, a supply line 9b for the conductive rubber mixture 30 is the only essential component.

As schematically shown in figure 3, the elongated injection element 7 actually divides the co-extruded tread layer 21 and tread base layer 26 across the thickness direction 3 and in the width direction 5 thereof to produce free surfaces 31 in said layers. The co-extruded rubber stream of tread and tread base layer rubber mixtures is divided since it has to flow around the injection element 7. Due to the flow of the rubber mixtures around the injection element 7, a division of the co-extruded rubber stream still exists over some distance 32 downstream of the injection element 7. In this part (the wake of the injection element 7) the average pressure will be lower than upstream of the injection element 7, and since the slit 7b is positioned in the downstream part of the circumferential area of injection element 7, the conductive rubber mixture 30 is sucked into the downstream wake area, provides a coating onto the free surfaces 31 and is carried away with the rubber flow in the extrusion direction 4 (this direction corresponds to the longitudinal direction of the tire 1, see figure 1). Due to the pressure level that exists within the extrusion head and orifice 6, the free surfaces 31 rejoin after some distance 32. In this way, a thin conductive layer 30 is formed that extends over the thickness direction 3 of the tread layer 21 and the tread base layer 26 to provide the tire with a conductive insert 30 in the tread portion 20 of the tire 1, as shown in figure 1. This provides the tire 1 with antistatic properties. The tread base layer 26 may be conductive in which case the thin conductive insert 30 can extend into tread base layer 26. In case the tread base layer 26 is not or poorly conductive, the thin conductive insert 30 preferably extends across the total thickness of tread layer 21 and tread base layer 26 to make contact with the underlying conductive parts if the tire such as undertread layer 24 for instance (if this part is conductive). If the undertread layer 24 is also non or poorly conducting, an embodiment of the method comprises co-extruding the tread layer 21, tread base layer 26 and undertread layer 24 together and letting the conductive insert 30 extend across the total thickness of tread layer 21, tread base layer 26 and undertread layer 24 to make contact with the underlying conductive parts, such as steelcord layers and the like.

The above described arrangement makes it possible to produce conductive inserts or strips whose width can be extremely thin, i.e. may vary within a range of about 0.01 mm to 0,2 mm without the need to vary the width of the insert, for instance at the level of the bases of the two layers of rubber mixtures that are to be in electrical contact. However, it is entirely possible to envisage forms of slits other than those described here as a non-limiting example. Moreover, with the described device the conductive rubber mixture 30 can, if desired, be injected discontinuously, depending on the intended application, for example to produce a strip consisting of separate "dots" or "stripes". Existing co-extruding equipment is only slightly modified by the presence of the injection element, and such a modification is easily implemented in a production environment, micro-extruder. Moreover, when positioned in the flow channels of a co-extruder, the use of just one injection element with one or more slits for both channels facilitates mixture changes, since it suffices to ensure that the injection element is effectively empty to make such a change. It is easy to understand that several inserts can be made by providing several possible fixing positions in the flow channels, which could be used in succession or simultaneously according to the realization desired, with the aid of an appropriate number of injection elements. The shape of the slits formed in the injection element(s) can also be varied as desired.

The choice was made to describe the production of a tread portion having two layers of rubber mixtures 21 and 26, but the invention also applies to the production of tread portions with more than two layers of co-extruded mixtures. Without going beyond the scope of the invention, it is also clear that the method and device according to the invention may be used to position thin inserts in tires without regard to conductivity, as for example to apply one or more colored inserts in black rubber mixtures.

Although the invention has been described herein by reference to specific embodiments thereof, it will be understood that such embodiments are illustrative only and are susceptible of modification and variation with departing from the inventive concepts disclosed. All such modifications and variations, therefore, are intended to be encompassed within the scope of the appended claims.

## Claims

1. A method of manufacturing a tread layer of a tire (1), the tread layer comprising a rubber mixture and a conductive insert that extends across the thickness of the tread layer (21) from the ground contacting surface of the tread layer (21) to a conductive rubber layer (24) arranged underneath the tread layer, the method comprising the steps of:
a) extruding the tread layer (21) rubber using an extruder provided with at least one extrusion screw; **characterized by**:
b) temporarily dividing the extruded tread layer in the width direction thereof to produce free surfaces in the tread layer (21);
c) coating the free surfaces with a conductive rubber mixture; and
d) rejoining the free surfaces whereby the conductive rubber mixture forms the conductive insert (30),
wherein all steps a) to d) are carried out before cooling the extruded tread layer, and wherein the conductive rubber mixture comprises a conductive rubber solution.

2. Method according to claim 1, wherein the tread layer (21) and a, optionally conductive, rubber layer (24) arranged underneath the tread layer are co-extruded using a co-extruder provided with at least two extrusion screws.

3. Method according to claim 2, wherein the co-extruded tread (21) and optionally conductive rubber layers (24) are both temporarily divided and rejoined.

4. Method according to any one of the preceding claims, wherein steps b) to d) are performed by placing an elongated injection element in the extruded layer(s), the injection element comprising a supply channel for the conductive rubber mixture and a slit in its circumferential surface connecting to the supply channel, and letting the conductive rubber mixture flow out of the slit.

5. Method according to claim 4, wherein the conductive rubber mixture is ejected from the slit under pressure.

6. Method according to claim 4 or 5, wherein ejecting the conductive rubber mixture is performed intermittently.

7. Device for manufacturing a tread layer of a tire, the tread layer (21) comprising a rubber mixture (24) and a conductive insert (30) that extends across the thickness of the tread layer (21) from the ground contacting surface of the tread layer (21) to a conductive rubber layer (24) arranged underneath the tread layer, the device comprising:
a) an extruder provided with at least one extrusion screw for extruding the tread layer rubber; **characterized by**:
b) dividing means for temporarily dividing the extruded tread layer (21) in the width direction thereof to produce free surfaces in the tread layer;
c) coating means for coating the free surfaces with a conductive rubber solution; and
d) rejoining means for rejoining the free surfaces whereby the conductive rubber mixture forms the conductive insert (30),
wherein the at least one extrusion screw comprises a downstream flow channel provided with an extrusion orifice, and the dividing and coating means are located in the flow channel or in the extrusion orifice.

8. Device according to claim 7, wherein the extruder comprises a co-extruder provided with at least two extrusion screws.

9. Device according to claim 7 or 8, wherein the extrusion screw or screws comprise a downstream flow channel provided with an extrusion orifice, and the dividing and coating means are located in the flow channel between the end of the screw or screws and the extrusion orifice.

10. Device according to any one of claims 7-9, wherein the dividing and coating means are combined and comprise an elongated injection element comprising a supply channel for the conductive rubber mixture and a slit in its circumferential surface connecting to the supply channel.

11. Device according to claim 10, wherein the elongated injection element comprise pressure means connected to the supply channel.

12. Device according to claim 11, wherein the pressure means comprise a pump and valve.

## Patentansprüche

1. Verfahren zum Herstellen einer Laufflächenschicht eines Reifens (1), wobei die Laufflächenschicht eine Gummimischung und eine leitfähige Einlage aufweist, die sich von der Bodenkontaktfläche der Laufflächenschicht (21) über die Dicke der Laufflächenschicht (21) zu einer unter der Laufflächenschicht angeordneten leitfähigen Gummischicht (24) erstreckt, wobei das Verfahren die Schritte aufweist:
a) Extrudieren des Gummis der Laufflächenschicht (21) unter Verwendung eines Extruders, der mindestens eine Extrusionsschnecke aufweist;
**gekennzeichnet durch**:
b) vorübergehendes Auftrennen der extrudierten Laufflächenschicht in ihrer Breitenrichtung zum Erzeugen freier Oberflächen in der Laufflächenschicht (21);
c) Beschichten der freien Oberflächen mit einer leitfähigen Gummimischung; und
d) erneutes Verbinden der freien Oberflächen, wodurch die leitfähige Gummimischung die leitfähige Einlage (30) bildet,
wobei alle Schritte a) bis d) vor dem Abkühlen der extrudierten Laufflächenschicht ausgeführt werden, und wobei die leitfähige Gummimischung eine leitfähige Gummilösung enthält.

2. Verfahren nach Anspruch 1, wobei die Laufflächenschicht (21) und eine unter der Laufflächenschicht angeordnete, optional leitfähige Gummischicht (24) unter Verwendung eines Co-Extruders mit mindestens zwei Extrusionsschnecken coextrudiert werden.

3. Verfahren nach Anspruch 2, wobei die coextrudierte Lauffläche (21) und optional leitfähige Gummischichten (24) beide vorübergehend aufgetrennt und dann erneut verbunden werden.

4. Verfahren nach einem der vorangehenden Ansprüche, wobei die Schritte b) bis d) ausgeführt werden durch Anordnen eines länglichen Einspritzelements in der (den) extrudierten Schicht(en), wobei das Einspritzelement einen Zufuhrkanal für die leitfähige Gummimischung und einen mit dem Zufuhrkanal verbundenen Schlitz in seiner Umfangsfläche aufweist, und Veranlassen, dass die leitfähige Gummimischung aus dem Schlitz herausfließt.

5. Verfahren nach Anspruch 4, wobei die leitfähige Gummimischung unter Druck von dem Schlitz ausgestoßen wird.

6. Verfahren nach Anspruch 4 oder 5, wobei das Ausstoßen der leitfähigen Gummimischung intermittierend ausgeführt wird.

7. Vorrichtung zum Herstellen einer Laufflächenschicht eines Reifens, wobei die Laufflächenschicht (21) eine Gummimischung (24) und eine leitfähige Einlage (30) aufweist, die sich von der Bodenkontaktfläche der Laufflächenschicht (21) über die Dicke der Laufflächenschicht (21) zu einer unter der Laufflächenschicht angeordneten leitfähigen Gummischicht (24) erstreckt, wobei die Vorrichtung aufweist:
a) einen Extruder mit mindestens einer Extrusionsschnecke zum Extrudieren des Gummis der Laufflächenschicht;
**gekennzeichnet durch**:
b) eine Trenneinrichtung zum vorübergehendes Auftrennen der extrudierten Laufflächenschicht (21) in ihrer Breitenrichtung zum Erzeugen freier Oberflächen der Laufflächenschicht;
c) eine Beschichtungseinrichtung zum Beschichten der freien Oberflächen mit einer leitfähigen Gummilösung; und
d) eine Wiederverbindungseinrichtung zum erneuten Verbinden der freien Oberflächen, wodurch die leitfähige Gummimischung die leitfähige Einlage (30) bildet,
wobei die mindestens eine Extrusionsschnecke einen stromabwärtsseitigen Strömungskanal aufweist, der eine Extrusionsöffnung aufweist, und wobei die Trenn- und die Beschichtungseinrichtung im Strömungskanal oder in der Extrusionsöffnung angeordnet sind.

8. Vorrichtung nach Anspruch 7, wobei der Extruder einen Co-Extruder aufweist, der mindestens zwei Extrusionsschnecken aufweist.

9. Vorrichtung nach Anspruch 7 oder 8, wobei die Extrusionsschnecke oder die Extrusionsschnecken einen stromabwärtsseitigen Strömungskanal aufweist (aufweisen), der eine Extrusionsöffnung aufweist, und wobei die Trenn- und die Beschichtungseinrichtung im Strömungskanal zwischen dem Ende der Extrusionsschnecke oder der Extrusionsschnecken und der Extrusionsöffnung angeordnet sind.

10. Vorrichtung nach einem der Ansprüche 7 bis 9, wobei die Trenn- und die Beschichtungseinrichtung kombiniert sind und ein längliches Einspritzelement mit einem Zufuhrkanal für die leitfähige Gummimischung und einen mit dem Zufuhrkanal verbundenen Schlitz in seiner Umfangsfläche aufweisen.

11. Vorrichtung nach Anspruch 10, wobei das längliche Einspritzelement eine mit dem Zufuhrkanal verbundene Druckerzeugungseinrichtung aufweist.

12. Vorrichtung nach Anspruch 11, wobei die Druckerzeugungseinrichtung eine Pumpe und ein Ventil aufweist.

## Revendications

1. Procédé de fabrication d'une couche de bande de roulement d'un pneumatique (1), la couche de bande de roulement comprenant un mélange de caoutchouc et un insert conducteur qui se prolonge à travers l'épaisseur de la couche de bande de roulement (21) à partir de la surface de contact avec le sol de la couche de bande de roulement (21 ) à une couche de caoutchouc conducteur (24) disposée sous la couche de bande de roulement, le procédé comprenant les étapes consistant à:
a) extruder la couche de bande de roulement (21) en caoutchouc en utilisant une extrudeuse pourvue d'au moins une vis d'extrusion ; **caractérisé par**:
b) diviser temporairement la couche de bande de roulement extrudée dans la direction de sa largeur pour produire des surfaces libres dans la couche de bande de roulement (21) ;
c) revêtir les surfaces libres avec un mélange de caoutchouc conducteur ; et
d) rejoindre les surfaces libres de sorte que le mélange de caoutchouc conducteur forme l'insert conducteur (30),
dans lequel toutes les étapes a) à d) sont effectuées avant de refroidir la couche de bande de roulement extrudée, et dans lequel le mélange de caoutchouc conducteur comprend une solution de caoutchouc conducteur.

2. Procédé selon la revendication 1, dans lequel la couche de bande de roulement (21) et une couche de caoutchouc (24), éventuellement conductrice, disposée sous la couche de bande de roulement sont co-extrudées en utilisant une co-extrudeuse pourvue d'au moins deux vis d'extrusion.

3. Procédé selon la revendication 2, dans lequel la bande de roulement (21) et la couche de caoutchouc (24) éventuellement conductrice co-extrudées sont toutes les deux temporairement divisées et rejointes.

4. Procédé selon l'une quelconque des revendications précédentes, dans lequel les étapes b) à d) sont effectuées en plaçant un élément d'injection allongé dans la(les) couche(s) extrudée(s), l'élément d'injection comprenant un canal d'alimentation pour le mélange de caoutchouc conducteur et une fente dans sa surface circonférentielle raccordant au canal d'alimentation, et en laissant s'écouler le mélange de caoutchouc conducteur hors de la fente.

5. Procédé selon la revendication 4, dans lequel le mélange de caoutchouc conducteur est éjecté de la fente sous pression.

6. Procédé selon la revendication 4 ou la revendication 5, dans lequel l'éjection du mélange de caoutchouc conducteur est effectuée par intermittence.

7. Dispositif de fabrication d'une couche de bande de roulement d'un pneumatique, la couche de bande de roulement (21) comprenant un mélange de caoutchouc (24) et un insert conducteur (30) qui se prolonge à travers l'épaisseur de la couche de bande de roulement (21) à partir de la surface de contact avec le sol de la couche de bande de roulement (21) à une couche de caoutchouc conducteur (24) disposée sous la couche de bande de roulement, le dispositif comprenant:
a) une extrudeuse pourvue d'au moins une vis d'extrusion pour extruder le caoutchouc de la couche de bande de roulement ; **caractérisé par** :
b) des moyens de division pour diviser temporairement la couche de bande de roulement extrudée (21) dans la direction de sa largeur pour produire des surfaces libres dans la couche de bande de roulement ;
c) des moyens de revêtement pour revêtir les surfaces libres avec une solution de caoutchouc conducteur ; et
d) des moyens de réassemblage pour rejoindre les surfaces libres de sorte que le mélange de caoutchouc conducteur forme l'insert conducteur (30),
dans lequel la au moins une vis d'extrusion comprend un canal d'écoulement en aval pourvu d'un orifice d'extrusion, et les moyens de division et de revêtement sont situés dans le canal d'écoulement ou dans l'orifice d'extrusion.

8. Dispositif selon la revendication 7, dans lequel l'extrudeuse comprend une co-extrudeuse pourvue d'au moins deux vis d'extrusion.

9. Dispositif selon la revendication 7 ou la revendication 8, dans lequel la vis ou les vis d'extrusion comprennent un canal d'écoulement en aval pourvu d'un orifice d'extrusion, et les moyens de division et de revêtement sont situés dans le canal d'écoulement entre l'extrémité de la vis ou des vis et l'orifice d'extrusion.

10. Dispositif selon l'une quelconque des revendications 7-9, dans lequel les moyens de division et de revêtement sont combinés et comprennent un élément d'injection allongé comportant un canal d'alimentation pour le mélange de caoutchouc conducteur et une fente dans sa surface circonférentielle raccordant au canal d'alimentation.

11. Dispositif selon la revendication 10, dans lequel l'élément d'injection allongé comprend des moyens de pression raccordé au canal d'alimentation.

12. Dispositif selon la revendication 11, dans lequel les moyens de pression comprennent une pompe et une vanne.
